(19) Europäisches Patentamt
European Patent Office
Office européen des brevets

(11) EP 2 727 825 B1

(12) **EUROPEAN PATENT SPECIFICATION**

(45) Date of publication and mention
of the grant of the patent:
**17.12.2014 Bulletin 2014/51**

(51) Int Cl.:
***B64C 3/50*** *(2006.01)*      ***B64C 3/48*** *(2006.01)*

(21) Application number: **12425175.2**

(22) Date of filing: **30.10.2012**

(54) **Device for modifying the airfoil geometry**

Vorrichtung zum Modifizieren der Tragflächengeometrie

Dispositif pour modifier la géométrie d'une voilure

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(43) Date of publication of application:
**07.05.2014 Bulletin 2014/19**

(73) Proprietor: **C.I.R.A. (Centro Italiano Ricerche
Aerospaziali) -
S.C.P.A.
81043 Capua (CE) (IT)**

(72) Inventor: **Ameduri, Salvatore
81043 Capua (CE) (IT)**

(74) Representative: **Ponzellini, Gianmarco
Ponzellini, Gioia e Associati S.r.l.
Via Mascheroni, 31
20145 Milano (IT)**

(56) References cited:
**WO-A1-2004/108525      GB-A- 1 580 974
US-A- 3 698 668      US-A- 3 716 209
US-A- 3 836 099      US-A1- 2010 224 734**

**Description**

## FIELD OF THE INVENTION

The present invention concerns a device for varying the geometry of the wing profile. The present invention is usable on aircraft wings, such as aeroplanes for civil use.

In detail, the invention is particularly researched for modifying the geometry of the wing leading edge with the aim of moving it from an undeformed condition optimised for cruise flight to a high lift condition, necessary during the steps of taking-off and/or landing of the aircraft.

## PRIOR ART

The wing is the horizontal surface of an aircraft aimed at generating lift by means of the aerodynamic forces acting thereon.

The wing of an aircraft is characterised by a predetermined wing profile the shape of which determines, among other things, the flight characteristics of an aircraft. The need to adapt to various flight conditions has led to the introduction of special devices configured such as to vary, during some steps, the geometry of the wing profile, with a consequent introduction of the possibilities of adapting the wing to various situations (for example the step of landing, taking-off or cruising). These devices, known as high lift devices, comprise mobile structures which modify the wing profile in the geometry thereof (length of the chord, curvature etc) varying the aerodynamic forces which are generated. In particular, these devices give the aircraft "high lift" in determined situations in which it is necessary to increase the wing lift (generally the term "flap" is used when the mobile parts modify the trailing edge or "slat" when the mobile parts modify the leading edge of the wing).

These mobile structures are, in fact, added structures which serve to modify the wing profile by varying in general both the length and the shape thereof; these mobile structures, when in use, exit from the wing compartment and cause the desired increase in lift (high lift); however, the surface geometrical discontinuities present in the retracted condition (cruise flight) increase the turbulent flows on the profile with a consequent reduction of the maximum theoretical lift of the wing and the increase of aerodynamic resistance.

For these reasons, devices have been designed for varying the wing profile which are able to cause deformation of the wing profile, also of the leading edge of the wing, exploiting mechanisms able to act from inside the wing profile on the involved surfaces without introducing interruptions in the continuity of the profile.

A first example, described in document US 3,716,209 A, concerns a lift generator, applicable to winged aircraft, configured to control auxiliary surfaces, such as flaps and ailerons. The lift generator exhibits a flexible external surface, defining a portion of a wing profile and an activating element configured for moving the flexible external surface. The activating element comprises a contact device, mobile by rotation with respect to a fixed body of the wing in a perpendicular plane to a longitudinal development direction of the wing. The device rests on the flexible surface, and following the movement of the contact device, pushes and deforms the flexible surface. The activating element is made up of an actuator constrained on a side thereof to the fixed body of the wing while, on the other side thereof it engages the contact device; the actuator is configured such as to push and consequently move the mobile device and enable deformation of the flexible external surface. The actuator operates on the same rotation plane as the contact device and generates a pushing force directed perpendicularly to the longitudinal direction of the wing (the pushing direction coincides substantially with the thrust/drag direction generated by the air.

A second example, described in document WO 2004/108525 A1, concerns a device for varying the geometry of aircraft wings for varying/moving the outer contours, in particular varying the wing profile of a wing.

The device comprises a deformable frame exhibiting externally thereof a first and a second mobile counter surface defining internally thereof a housing compartment. The deformable frame is mobile along a perpendicular plane to a longitudinal extension direction of the first and second surface. Internally of the housing compartment is a connecting frame engaged to the deformable frame and configured such as to reinforce the frame. The device comprises an actuator also engaged internally of the housing compartment and configured such as to exert, on the connecting frame, a push lying on the movement plane thereof. The actuator is, in fact, configured such as to exert a force, parallel to the rotation plane of the deformable frame, on the connecting frame such as to move the deformable frame with a consequent variation in shape of the external surfaces thereof.

A third example, described in document GB1580974A, concerns an aircraft lift producing members having lift increasing means for varying the geometry of aircraft wings for varying/moving the wing profile.

The wing of the aircraft has a fixed portion defining a main central body of the wing and a movable leading edge portion connected to said fixed portion: the movable portion is frontally positioned with respect to said fixed portion and is smoothly continuous with the exterior surface of this latter. The fixed portion has an extending spar from which a pair of parallel spaced chordwise arms fixedly protrudes (arms fixed to the main body of the wing). Pivoted to these fixed arms about a spanwise axis is a further pair of parallel spaced chordwise movable arms; each of said movable arm is constrained with the respective fixed arm, a guide tracks, and to the movable portion through respective links.

The rotation of the movable arms is generated by an actuator; each end of the actuator is connected respectively to said movable arms by means of a hinged connection: the movement of the actuator generates the rotation of the movable arms (6 and 7).

A fourth example, described in document US3698668, concerns a variable camber mechanism for an aerodynamic surface wherein a series of truss members are pivotally mounted on canted hinges and arranged in a general chordwise alignment of an aerodynamic surface.

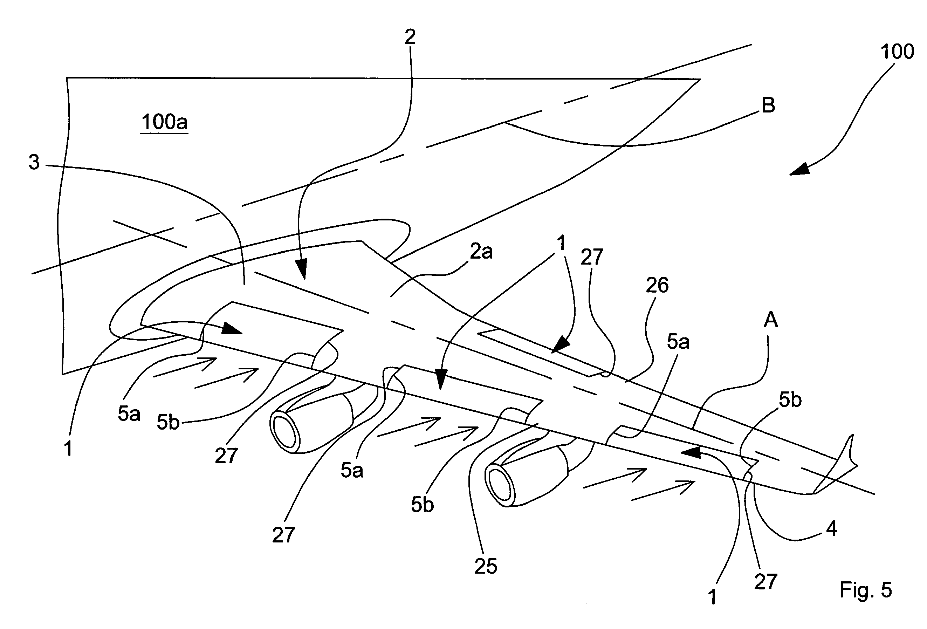

The members are actuated through a screw-drive mechanism to rotate out of alignment, they provide a chordwise contraction force which through a slip jointed undersurface, in the case of an airplane wing, permits the shortening of that surface relative to the upper surface and thereby provides the desired camber to the aerodynamic surface. See figure 5 reported below.

A fifth example, described in document US2010/224734A1, concerns an apparatus comprising a structure having a first side, a second side substantially opposite to the first side, a flexible skin, and a plurality of deformable assemblies. The flexible skin is attached to the first side and the second side of the structure. The plurality of deformable assemblies is moveably connected to the structure, in which each deformable assembly in the plurality of deformable assemblies has a vertex and a base. The each deformable assembly in the plurality of deformable assemblies has a height that is capable of changing to change a shape of the structure and a shape of the flexible skin. The deformable assembly has a single structure rotatable around a couple of hinge (single axis) and an actuator configure to rotate said single structure.

The above-described examples define wing profiles without discontinuities and able to vary the geometry of the wing profile. The devices described in the examples, with respect to traditional flaps and slats, are able to reduce the generation of turbulent flows at the wing profile. As previously described, this enables increasing the lift generated by the wing profile.

However the above-described examples are not without limitations and drawbacks. In particular, according to how they are structured and arranged inside the wing, these devices require high power to move the deformable portion (the actuator must work against both the elasticity of the deformable portion and the thrust action of the air, which is of high intensity especially in proximity of the leading edge of the wing) which requires the installation of high-power and large-dimension actuators: in this way the device is more complex, expensive and unwieldy, and often oversized.

## AIM OF THE INVENTION

The aim of the present invention is therefore to solve substantially at least one of the drawbacks and / or limitations of the previous solutions.

A first aim of the invention is to make available a compact and efficient device for varying the geometry of the wing profile, in particular which is able to reduce the force required for moving the deformable portion of the wing profile: in this way the installed power of the actuator can be minimised, with consequent reduction of costs. The compactness of the device is designed to simplify mounting thereof in very small spaces, such as inside a wing of an aircraft. The compactness of the device allows realising a wing profile able to induce advantages in terms of aerodynamic efficiency of the wing.

A further aim of the invention is to make available a device for variation of the wing profile which enables minimising the formation of turbulent flows at the wing profile resulting in maximisation of wing lift and reduction of aerodynamic drag.

A further aim is to obtain a system for implementation of the mechanism which effectively contrasts the aerodynamic forces that are opposed to the variation of the geometry of the profile, and also that, due to the configuration thereof, enables optimising the use of space within the wing structure.

One or more of the purposes described above and which will emerge during the following description are substantially achieved by a device for varying the geometry of the wing profile in accordance with one or more of the appended claims.

## BRIEF DESCRIPTION OF THE DRAWINGS

Some embodiments and aspects of the invention will be described herein with reference to the accompanying figures of the drawings, provided by way of non-limiting example, in which:

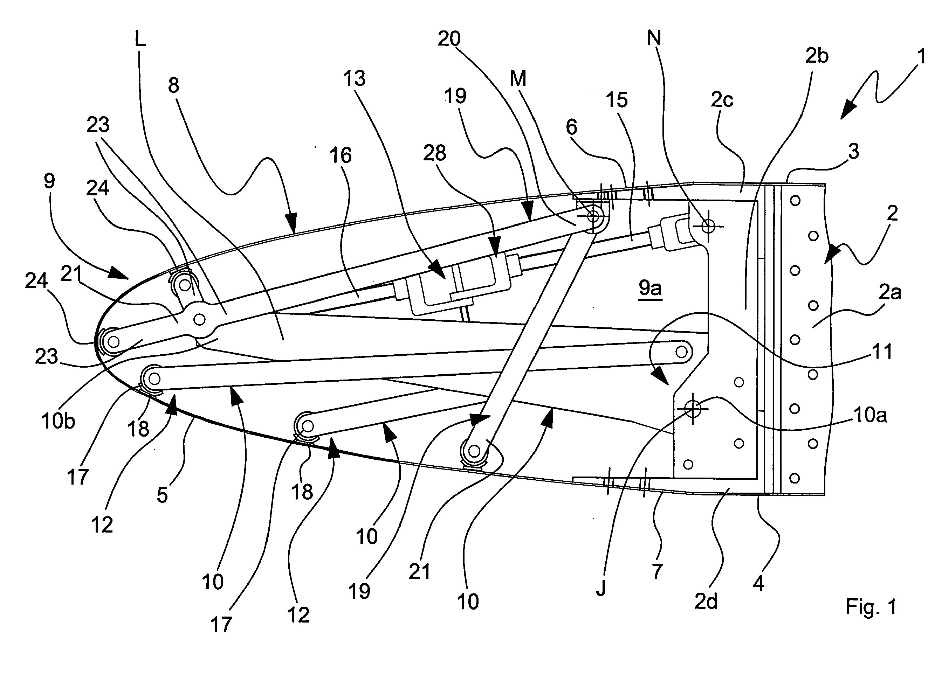

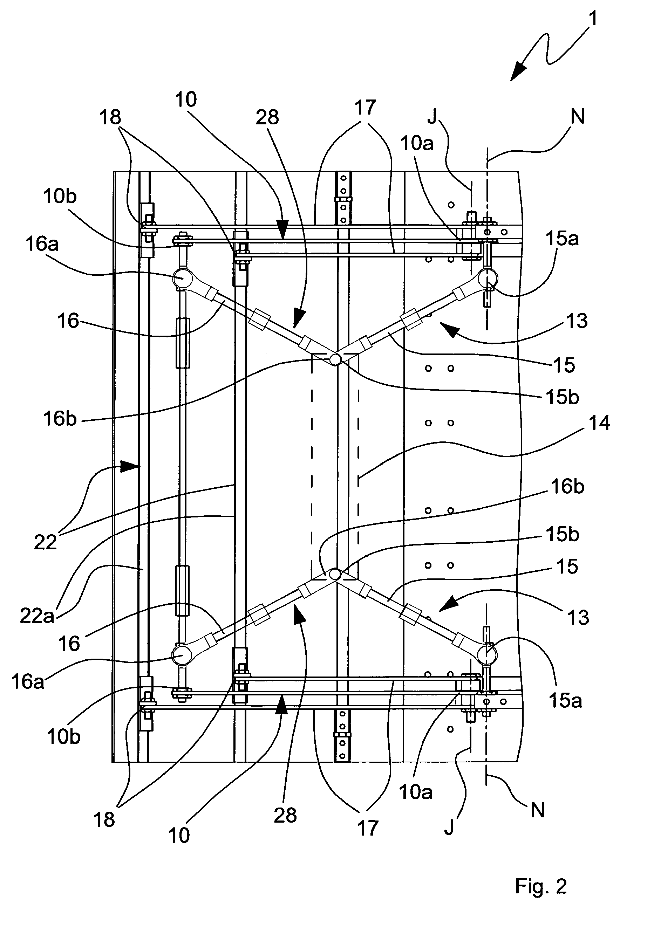

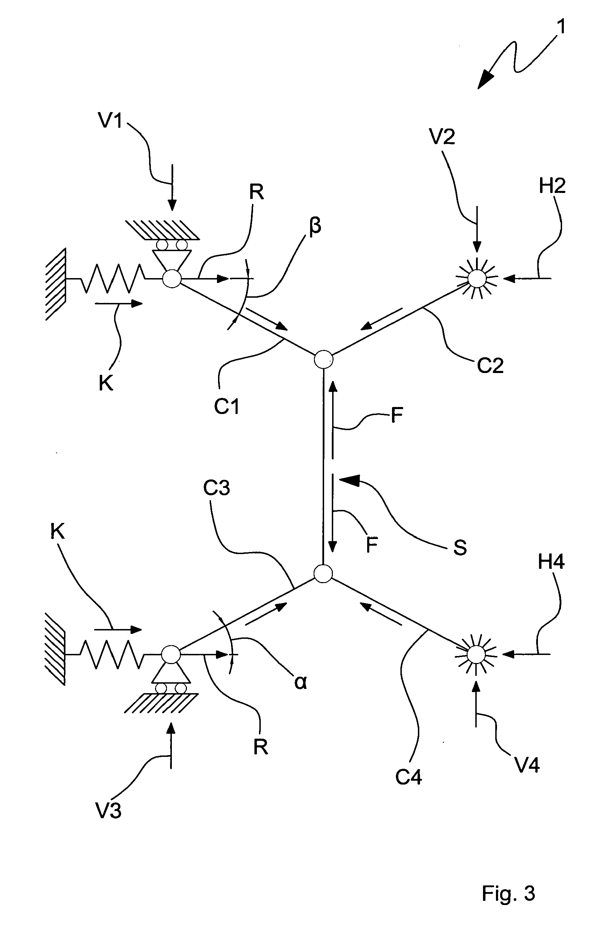

➢ figure 1 is a lateral view of a device for varying a wing profile according to the present invention;
➢ figure 2 is a view from above of the device for varying the wing profile according to the present invention;
➢ figure 3 is a schematic representation of an activating element of the device for varying the wing profile according to the present invention;

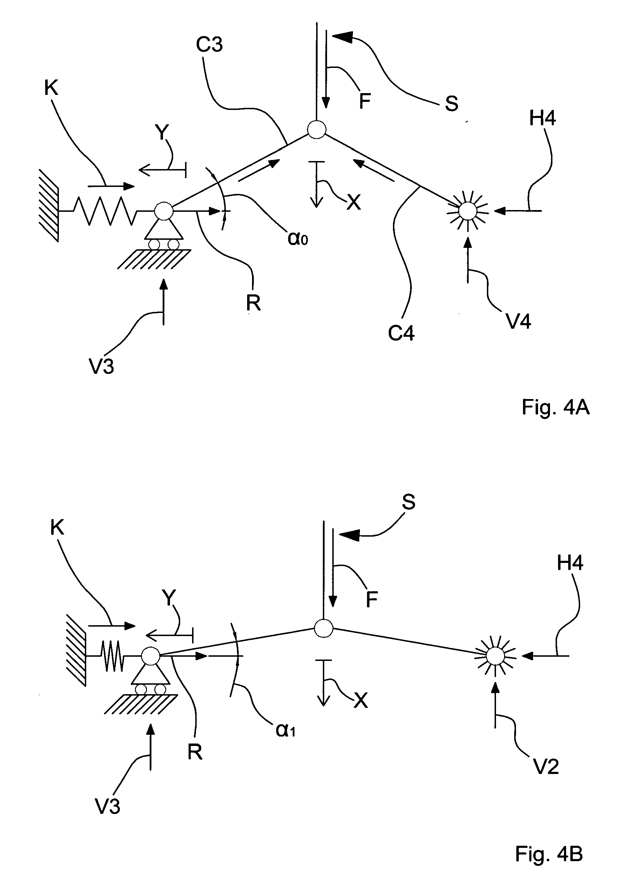

➢ figures 4A and 4B are schematic representations of the activating element of figure 3, respectively in different operating conditions thereof;

➢ figure 5 is a schematic illustration of the application of the device for varying the wing profile on a wing of an aircraft;

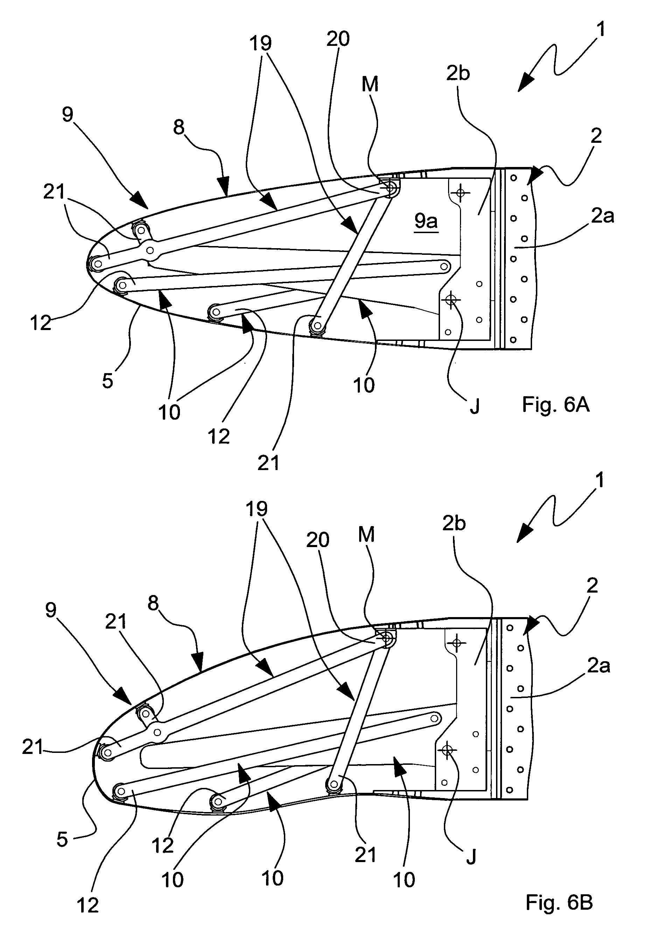

➢ figures 6a and 6b show the device in an undeformed condition and a high lift condition.

## DETAILED DESCRIPTION

Device for varying the wing profile.

Reference numeral 1 denotes in its entirety a device for varying the geometry of a wing profile. In particular, the device 1 is usable for leading edges of wings 2 of aircraft 100 for modifying the geometry of at least a part of a wing profile 9. Before proceeding with the detailed description of the device 1, it is useful to specify that the wings 2 comprise at least a wing body 2a fixed stably to a fuselage 100a of an aircraft 100 and emerging laterally with respect thereto (figure 5). In greater detail, the wing body 2a extends along a main development direction A transversal to a longitudinal development direction B of the aircraft, in particular of the fuselage 100a (see the schematic representation of the wing 2 and fuselage 100a of figure 5).

The wing 2 comprises a substantially rigid frame 2b stably constrained to the fuselage 100a of the aircraft 100 (in general constituted by longitudinal members and ribs and not detailed as of known type) which is clad by surfaces (panels) defining the external structure of the wing. Naturally the wing exhibits a predetermined wing profile 9 (wing section according to a perpendicular plane to the axis A).

The wing 2 exhibits at least an upper surface 3 and at least a lower surface 4 opposite one another. The wing body 2a exhibits a front surface or wing leading edge 25 and, at the rear portion, a trailing surface or trailing edge 26 opposite the leading edge 25 with respect to the body 2a itself. The body 2a thus-structured is configured such as to generate, in use conditions of the aircraft 100, a lift that can support the aircraft 100.

As mentioned, the above-described surfaces define, in a transversal direction to the main development direction A, a predetermined closed wing profile 9, the portion of leading edge of which is shown in figure 1. The wing defines internally thereof a housing compartment 9a able to contain the frame 2b.

As can be seen in figure 5, the wing body 2a exhibits one or more high lift zones 27, where the high lift surfaces are defined and which internally exhibit the device for varying the geometry of the wing profile.

In a preferred embodiment these high lift zones 27 are arranged at frontal portion (or possibly rear) of the wing 2 such that the device 1 can act on the leading surface 26 and/or on the trailing surface 26 of the wing 2.

Figure 1 schematically represents, in a lateral view and in section, the structure of the body 2a at the leading zone 27 (in particular a front portion of the body 2a is schematically represented at the wing leading surface 25). In the figure a portion of the frame 2b of the wing body 2a can be seen (frame fixed rigidly to the fuselage 100a of the aircraft 100), which exhibits a first and a second end, upper and lower 2c, 2d, opposite to one another, at which the frame 2b stably engages the upper and lower surfaces 3, 4 of the wing.

As is visible in figure 1, the device 1 for varying the geometry of the wing profile is frontally connected with the frame 2b of the wing 2.

Figure 1 illustrates, in a non-limiting way, a condition in which the device 1 acts on the front portion or leading edge 25 of the wing. However, the device 1 could also be engaged at a rear portion of the wing 2 such that the device 1 can define a trailing edge of the wing 2.

The device 1 comprises overall at least an exposed surface 8 extending substantially parallel to the development direction A of the body 2a for at least a portion of the overall development of the body 2a. The exposed surface 8 exhibits at least a first and at least a second engaging portion 6, 7 constrained (for example riveted) to the wing body 2a respectively at the upper surface and the lower surface 3, 4 of the wing. The exposed surface 8 defines, in cooperation with the upper surface 4 and the lower surface 5 of the body 2a, at least a front portion (or in an alternative not illustrated, a rear portion) of the wing 2 internally delimiting the housing compartment 9a.

As previously mentioned, figure 1 non-limitingly illustrates a preferred configuration of the device 1 engaged on a front portion of the wing configured such as to act on the front surface of the wing body.

As is visible in the detail of figure 1, the exposed surface 8 comprises at least a deformable portion 5 interposed between the first and the second engaging portion 6, 7 and mobile relatively to the wing body 2a such as to determine variations of shape (variations of geometry) of the wing profile 9 of the wing 2; in section, according to a perpendicular plane to the development direction A, the exposed surface 8 exhibits a continuous profile, with no break in continuity, between the first and the second engaging portion 6, 7 (see the figures).

In a preferred configuration of the device 1, the deformable portion 5 extends longitudinally along the whole development of the exposed surface 8 (parallel to the development direction of the body 2a of the wing 2) between a first and a second longitudinal end, while transversally it extends between the first and the second engaging surface 6, 7 of the exposed surface 8.

In the last above configuration, the deformable portion defines the entire front surface or leading edge 25 of the wing profile 9; the deformable portion 5 exhibits an unbroken continuous profile with the edge surfaces of the high lift zone 27 of the body 2a. In fact, the first and the second engaging portions 6, 7 of the exposed surface 8 are fixed to the body 2a of the wing 2 in such a way that the deformable portion 5 can be substantially continuous in curvature with the upper surface 3 and the lower surface 4 of the wing 2.

In a preferred embodiment illustrated in figure 1, the deformable portion 5, in a transversal section to the main development direction of the body 2a of the wing 2, defines a substantially arched C-shaped profile having a concavity facing towards the frame 2b of the wing 2.

In an alternative configuration, the deformable portion 5 might only define a part of the exposed surface 8: for example, it can extend longitudinally only over a portion of the exposed surface and/or only over a section comprised between the first and the second engaging portions 6, 7.

Again in reference to the deformable portion 5, the portion 5 comprises, in a non-limiting way, a metal cladding with slim panels configured such as to deform upon the action of a predetermined stress (as will be more fully described in the following) and at the same time is provided with a certain rigidity aimed at guaranteeing resistance to the aerodynamic forces during flight. As can be seen in figures 1 and 2, the device 1 further comprises a mechanism 10 for varying the wing profile arranged internally of the housing compartment 9a. The mechanism 10, on one side, is constrained to the structure of the wing while, on the other side, it contacts and is designed to act on the deformable portion 5.

In particular, the mechanism 10 exhibits a first engaging portion 11 constrained to the frame 2b of the wing 2 and at least a second engaging portion 12 constrained to, or at least active on, the deformable portion 5 of the exposed surface 8. The mechanism 10 is configured such as to move relatively to the frame 2b along at least a transversal plane to the main development direction A of the wing body 2a such as to define a variation in geometry of the deformable portion 5; the variation in geometry of the deformable portion 5 determining the variation in shape of the profile 9 of the wing 2 (compare figures 6a and 6b). In fact, the mechanism 10 is able to cause and guide the variation of geometry of the deformable portion 5.

The device 1 advantageously comprises a pair of mechanisms specularly arranged at the longitudinal ends of the deformable portion 5: in this way it is possible to have a variation in shape of the deformable portion 5 that is uniform and better guided with respect to a single-mechanism solution 10.

The figures represent, in a non-limitingly way, a preferred configuration of the device 1 in which the mechanism 10 is mobile by rotation with respect to the frame 2b about a transversal axis J, in particular perpendicular to the movement plane of the mechanism 10 and substantially parallel to the main development direction A of the wing body 2a. However, a mechanism 10 can be realised able to rotate and translate (or only translate) with respect to the frame 2b.

As can be seen for example in the detail of figure 1, the mechanism 10 for varying the wing profile first comprises a lever system L provided with a first and at least a second constraining portion 10a, 10b spaced from one another. The first constraining portion 10a is engaged to the frame 2b such as to define a constraint of a hinge type between the mechanism 10 and the frame: in this condition the lever system L is mobile in rotation about an axis J (perpendicular to the movement plane of the mechanism) in particular about the first constraining portion 10a.

As can be seen in figure 1, the mechanism 10 develops, non-limitingly, along a main development direction between a first and a second end. The first constraining portion 10a is arranged at the first end while the second constraining portion 10b is opposite the first constraining portion 10a, in particular arranged at the second end of the lever system L.

The figures illustrate a preferential condition of the lever system L, which exhibits a substantially plate-shaped configuration the length and width of which lie on a movement plane of the mechanism 10 (the plate extends in thickness substantially parallel to the direction of longitudinal development of the wing body 2a). This configuration of the lever system L enables reducing to a minimum the dimensions and consequently the volume thereof.

As can be seen in detail in figure 1, the mechanism for varying the wing profile comprises a plurality of pusher elements 17 able to rotate, following movements of the lever system L, substantially about the axis J. Each of the pusher elements 17 engages the deformable portion 5 at one or more different pushing points 18 such as to guide the variation in geometry of the deforming portion 5. In fact, the pusher element 17 comprises, non-limitingly, at least a bar constrained stably to an end of the lever system L, while on the other side it exhibits a contact portion defining a pushing point 18. The pushing point 18 preferably comprises an element which enables and follows the variation in shape of the wing profile: in this way the contact portion is configured such as to distribute the stresses on the deformable portion 5 and prevent sticking of the bar which might cause a malfunctioning of the mechanism 10, or also yield stress or breakage of the deformable portion 5.

The figures illustrate a preferred configuration of the mechanism 10 exhibiting two pusher elements 17 able to move the deformable portion. Alternatively it is possible to include one only pusher element or three or more elements 17. The number of pusher elements 17, and consequently contact points 18, is determined on the basis of the type of deformation which it is desired to obtain. The number and the positioning of the contact points will also very on the basis of the type of wing profile used and on the basis of the fact that the device is arranged in such a way as to deform the front portion or the rear portion of the wing profile 9.

As can be seen for example in figure 2, the device 1 further comprises a predetermined number of stiffening elements (22) (bars) constrained to the second engaging portion 12 of the mechanism 10 for varying the geometry of the wing profile and extending along the whole longitudinal development of the deformable portion 5 substantially parallel to the longitudinal extension direction of the exposed surface 8. The stiffening element 22 contacts at least a longitudinal strip of the deformable portion 5 and is configured such as to define, on the strip, a reinforcement (stiffening) of the deformable portion.

In more detail, the stiffening element 22 comprises a bar 22a connected at a side to the second engaging portion 12 of the mechanism 10 for varying the wing profile and, on the other side, is in contact with the deformable portion 5; the bar 22a defines, in fact, the longitudinal contact strip.

In still greater detail, a bar 22a is present that is connected with each pusher element, in particular with each pushing point 18. in order better to guarantee a stiffening of the deformable portion 5, each bar 22a extends over the longitudinal development of the deformable portion 5.

In the preferential condition, in which there are two mechanisms 10 located at the longitudinal ends 5a, 5b of the deformable portion 5, a stiffening element 2 is present, interposed between the mechanisms 10 and engaged with the respective second engaging portion 12 of each of the mechanisms 10 for varying the wing profile (see for example figure 2).

As can be seen in figures 1 and 2, the device 1 comprises, in a non-limiting way, a second mechanism 19 for varying the wing profile, also arranged internally of the housing compartment 9a of the wing profile 9. The second mechanism 19, on one side, is constrained (directly or indirectly) to the frame 2b of the wing 2, while, on the other side it contacts the deformable portion 5. In particular, the second mechanism 19 exhibits a first engaging portion 20 constrained to the frame 2b of the wing body 2a and at least a second engaging portion constrained at least to the deformable portion 5 of the exposed surface 8. The second mechanism 19 is configured such as to move relatively to the frame 2b along a parallel plane (or eventually coinciding) to the movement plane of the mechanism 10. In particular the second mechanism 19 is also configured such as to move along a transversal plane to the main development direction A of the wing body 2a in order to define a variation in geometry of the deformable portion 5: the variation of geometry of the deformable portion 5 enables varying the shape of the wing profile 9 of the wing 2. In fact, the second mechanism 19, like the mechanism 10, is able to cause and guide the variation of the deformable portion 5.

As mentioned and as can be seen, for example in figure 2, the device 1 comprises at least a second mechanism 19 present in each longitudinal end of the deformable portion 5. In fact, the second mechanism 19 cooperates with the main mechanism 10 such as together to move the deformable portion 5.

In the figures, a non-limiting preferred configuration of the device 1 is illustrated, in which the second mechanism 19 is mobile by rotation with respect to the frame 2b about a transversal axis M, in particular perpendicular, to the movement plane of the second mechanism 19. However, it is possible to realise a second mechanism 19 able to rotate and translate with respect to the frame 2b.

As can be seen, for example in the detail of figure 1, the first engaging portion 20 of the second mechanism 19 for varying the geometry of the wing profile is distanced from the first engaging portion 11 of the mechanism 10 for varying the geometry of the wing profile in such a way that the rotation axis M of the mechanism 19 is distanced from the rotation axis J of the mechanism 10. This configuration enables rotating the mechanisms 10 and 19 in coinciding planes or in any case planes parallel to one another but about different rotation axes. Note that the mechanism 10 and the second mechanism 19 are constrained to one another at the second end 10b of the lever system L and therefore the movement imposed on the mechanism 10 is, at least partly, transferred to the second mechanism 19.

As visible in detail in figure 1, the second mechanism 19 for varying the wing profile comprises a plurality of pusher elements 23 able to rotate, about axis M.

Each of the pusher elements 23 engages the deformable portion 5 at one or more different pushing points 24 (different from the pushing points 18 of the mechanism 10), such as to guide the varying of the geometry of the deformable portion 5. In fact, each pusher element 23 comprises, in a non-limiting way, a bar constrained stably to an end of the frame 2b such as to define a constraint of a hinge-type, while, at the opposite end, it exhibits a contact portion defining the pushing point 24. As for the pushing point 18, the point 24 preferably comprises an element able to follow the variation of shape of the wing profile: in this way the contact portion is configured such as to distribute the stresses on the deformable portion 5 and prevent the bar from sticking, which might cause a malfunctioning of the mechanism, as well as the yield stress or the breakage of the deformable portion 5.

The accompanying figures illustrate a preferable configuration of the second mechanism 19 exhibiting two pusher elements 23 able to guide the movement of the deformable portion. Alternatively, one only pusher element can be provided, or three or more elements 23. The number of pusher elements 23, and consequently contact points 24, is determined on the basis of the type of deformation which is required. The number and the arrangement of the contact points will also vary on the basis of the type of wing profile used and on the basis of the fact that the device is arranged such as to define the front portion or rear portion of the wing profile 9.

As can be seen in figure 2, the device 1 further comprises a stiffening element 22 constrained to the second engaging portion 21 of the mechanism 19 for varying the wing profile and extending along all the longitudinal development of the deformable portion 5 substantially parallel to the longitudinal extension direction of the exposed surface 8. The stiffening element 22 contacts at least a longitudinal strip of the deformable portion 5 and is configured such as to define on the strip a reinforcement (stiffening) of the deformable portion 5.

As previously described, the stiffening element 22 comprises a bar 22a which, in this case, is connected at an end to the second engaging portion 21 of the second mechanism 19 for varying the wing profile and at the other end is in contact with the deformable portion 5; the bar 22a defines the longitudinal contact strip. In still greater detail, a bar 22a is present connected with each pusher element 23 of the second mechanism 19, in particular with each pushing point 24; each bar 22a extends over all the longitudinal development of the deformable portion 5. In the preferred condition in which there are two second mechanism 19 located at the longitudinal ends 5a, 5b of the deformable portion 5, the stiffening element 22 is interposed between the second mechanisms 19 and engaged with the respective second engaging portions 21 thereof.

As can be seen in figure 2, the device 1 comprises at least an activating element 13 configured such as to move the mechanism 10 for varying the wing profile along the respective movement plane with a consequent moving of the deformable portion 5 and a variation in shape thereof.

In greater detail, the activating device 13 comprises a kinematic mechanism 28 receiving the push S generated by an actuator 14 and configured such as in turn to move the mechanism 10.

The actuator 14 is positioned and configured such as to generate a push S in a transversal direction to the movement plane of the mechanism 10, while the kinematic mechanism 28 receives the push S generated by the actuator 14, generating, in turn, a corresponding action on the mechanism 10 such as to move it into the movement plane transversal to the main development direction A.

In other terms, and as more fully clarified in the following, the actuator operates in a substantially parallel direction to the wing development direction A (in fact substantially perpendicular to the movement plane of the mechanism 10 for varying the geometry of the wing profile) and the kinematic mechanism 28 converts the push S into a series of forces which move the mechanism 10 in the movement plane thereof.

For this purpose the kinematic mechanism 28 comprises at least a first arm 15 exhibiting at least a first and a second engaging portion 15a, 15b located respectively at a first and a second end. The first engaging portion 15a is hinged to the frame 2b of the wing 2 at a point distanced from the first constraining portion 10a of the mechanism 10. The kinematic mechanism 28 further exhibits a second arm 16 provided with at least a first and a second engaging portion 16a, 16b located respectively at a first and a second end of the second arm 16. The first engaging portion 16a is hinged to the second constraining portion 10b of the mechanism 10, while the second engaging portion 16b is hinged to the second engaging portion 15b of the first arm 15. In fact, the first and the second arm 15, 16 are configured such as to rotate about the first engaging portion 15a of the first arm 15 (about an axis N distanced from the rotation axis J of the mechanism 10): the engagement between the second constraining portion 10b of the mechanism 10 and the first engaging portion 16a of the second arm 16 is such that a distancing motion between the ends 15a and 16a of the respective arms 15, 16 causes a rotation of the mechanism 10 about the axis J.

In other words, the second engaging portions 15b, 16b, respectively of the first and second arm 15, 16, are constrained in motion and configured such as to move from a retracted position, more distant from the movement plane of the mechanism 10, to an advanced position, located nearer the movement plane of the mechanism 10. Following the movement from the retracted position to the advanced position and vice versa, the second engaging portions 15b, 16b respectively of the first and second arm 15, 16 set the first and second arm 15, 16 in rotation about the first engaging portion 15a of the first arm 15 (axis of rotation N) and consequently cause the rotation of the mechanism 10 about the axis J.

In more detail, the first engaging portion 15a of the first arm 15, the first engaging portion 16a of the second arm 16 and the second engaging portions 15b, 16b (respectively of the first and second arm 15, 16) substantially define a three-hinged arch. In still greater detail, the first engaging portion 15a of the first arm 15 defines a first hinge stably engaged to the body 2a of the wing 2, the first engaging portion 16a of the second arm 16 defines a hinge engaged in motion to the mechanism 10, while the second engaging portions 15b, 16b define a mobile hinge able to receive the first and the second arm 15, 16.

The distance between the first engaging portion 15a (constrained stably to the body 2a) of the first arm 15 and the first engaging portion 11 (constrained stably to the body 2a) of the mechanism 10, enables defining the movement (rotation) thereof following the movement between the retracted position and the advancement position of the kinematic mechanism.

As is visible for example in figure 2, the activating element 13 comprises at least an actuator 14 (such as a hydraulic cylinder) configured such as to define a push S, able to move the mechanism 10, which exhibits an activating direction of the mechanism 10 that is transversal to the movement plane of the mechanism 10.

In greater detail, the actuator 14 is configured such as to generate a force F developing along a substantially perpendicular direction to the movement plane of the mechanism 10. In fact, this force F is directed substantially parallel to the main development direction of the wing body 2a and parallel to the axes J and N respectively of the mechanism 10 and the activating element 13.

As can be seen for example in figure 2, the actuator 14 (for example a hydraulic piston or another equivalent push generating system) is engaged with at least one and in particular both the second engaging portions 15b, 16b of the first and second arm 15, 16. The actuator 14 is in particular configured such as to apply the force F on the engaging portions 15b, 16b in order to move the activating device 13 between the retracted position and the advanced position and vice versa.

In fact, the activation of the actuator 14 causes the movement of the mechanism 10 and consequently the variation in shape of the deformable surface 5.

As previously described, the second arm 16 (the element able to impart a rotation on the deformable portion 5) is connected to the mechanism 10. The mechanism 19 is in turn moved by the variation in shape of the deformable portion 5 and by a direct connection to the lever system L at the portion 10b. In particular, it is the variation ins shape of the deformable portion 5 that pushes the second mechanism 19 and causes rotation thereof.

In the preferred configuration of the device 1 described above, i.e. exhibiting two mechanisms 10 that are opposite and arranged at the first and second longitudinal end 5a, 5b of the deformable portion 5, the activating element 13 is advantageously interposed between the mechanisms 10 and active on both. In the last described case, the actuator 14 is configured such as to push both the arms 15 and 16 of the opposite activating elements 13 in order to activate both the mechanism 10 simultaneously and contemporaneously.

**Process of variation of the geometry of the wing profile.**

The process for varying the geometry of the wing profile, in particular for leading edges of wings 2 of aircraft 100, comprises a step of application of a force F, by means of the activating element 13, exhibiting an activating direction that is transversal to the movement pane of the mechanism 10. In particular, the force F is generated by the actuator 14 which directs the force F perpendicularly to the movement plane of the mechanism 10.

The force F of the actuator 14 is applied directly or on at least one of the second engaging portions 15b, 16b respectively of the first and second arm 15, 16 or on the mobile hinge engaged thereto.

The step of application of the force F generates a movement of the mechanism 10 along the movement plane transversal to the main development direction of the wing body 2a. In greater detail, the step of moving the mechanism 10 includes a sub-step of rotation of the mechanism 10 about the axis J substantially parallel to the main development direction A of the wing body 2a. In still greater detail, the step of moving the mechanism 10 comprises a substep of rotating the first and second arm 15, 16 about the first engaging portion 15a of the first arm 15 which is distanced from the rotation axis J of the mechanism 10: the step of moving the first and second arm in particular in rotation sets the mechanism 10 in rotation.

A substep is also included of moving the second engaging portions 15b, 16b respectively of the first and the second arm 15, 16, distancingly with respect to the plane of movement of the mechanism 10 such as to define a retracted position of the activating element 13. The movement step of the first and second arms 15, 16 further comprises at least a substep of moving the second engaging portions 15b, 16b, respectively of the first and second arm 15, 16, nearingly with respect to the movement plane of the mechanism 10 such as to define an advanced position of the kinematic mechanism 28. At least during one of the movement steps of the first and second arm 15, 16, the mechanism 10 rotates about the axis J.

The step of rotating the first and second arm 15, 16 about the first engaging portion 15a of the first arm 15 comprises at least the following substeps:

➢ moving nearingly and/or distancing, with respect to the movement plane of the mechanism 10, the mobile hinge engaging the first and second arm 15, 16;

➢ moving, following the preceding step, the hinge, defined by the first engaging portion 16a of the second arm 16 and the second constraining portion of the mechanism 10, along a parallel plane to the movement plane of the mechanism (10).

In fact, the movement of the mechanism 10 causes the rotation of the pusher elements 17 about the rotation axis J of the mechanism 10, which elements 17 push restingly on the deformable portion 5.

Following the application of the force F and consequently the movement of the mechanism 10, a step exists of varying the geometry of the deformable portion 5 caused by the movement of the mechanism 10 and in particular the rotation (push) of the pusher elements 17.

The process can further comprise a step of rotating the second mechanism 19 relatively to the body 2a and according to an axis M parallel to and distanced from the axis J of the mechanism 10: the movement of the second mechanism 19 further guides the variation in geometry of the deformable portion 5.

## ADVANTAGES OF THE INVENTION

The device for varying the wing profile and the process of varying the profile provide advantages with respect to the prior art.

The above-described device 1 is able to produce a deformation of the leading edge (in the literature referred-to as the "droop nose") and/or of the trailing edge of a wing profile. This deformation is aimed at producing high lift while at the same time preventing geometrical discontinuities on the wing surface, caused by traditional high-lift devices (for example slats and flaps); the benefits brought by the device of the invention are represented by a greater persistence of the regime of laminar flow (due to the absence of the non-smooth surfaces and/or discontinuities), with a consequent reduction of the aerodynamic drag.

Further, the fact of mounting the actuator in the wing span direction enables on the one hand exploiting a generally larger space than the space available internally of the wing, while on the other hand implementing an appropriate kinematic mechanism 28 which reduces the forces effectively necessary for opposing the aerodynamic load and thus producing the lowering of the leading edge.

As previously described, the transversal kinematic mechanism which transmits the movement of the mechanism 10 is based on the scheme of the three-hinged arch (figures 3, 4A and 4B). As illustrated in figure 2, the actuator 14 is arranged transversally and is connected by means of three-hinge arches to the lateral kinematic chains (activating element 13) which lie in the plane of the wing 2. The expansion of the actuator 14 (figure 4B) causes a transversally-directed displacement X of the vertices of the three-hinge arches, with a consequent distancing of the points respectively connected to the wing body 3a and to the mechanism 10 (displacement Y in a substantially perpendicular direction to the direction of the force F of the actuator 14), which leads to a lowering of the kinematic chains lying in the plane of the wing 2. The advantage of the connection via three-hinged arches is connected to the amplification of the force exerted by the actuator 14. The amplification factor increases with the extension of the actuator 14 and with the alignment of the three points of the arches. This characteristic is extremely advantageous: the aerodynamic load increases with the increase of the downward deflections of the leading edge (increase of the peak of expansion), requiring higher actuating forces. By using the scheme with a three-hinged arch there are more favourable amplification factors, due exactly to the larger deflections, and this enables sizing the actuator 14 for forces that are overall lower.

The scheme with the three-hinged arch also enables deforming the cladding (deformable portion), thus inducing large displacements, without excessively raising the tension state therein; a low level of stress leads to advantages in terms of fatigue behaviour, increase in working life and therefore maintenance costs.

The angle between the rods and the arches represents an important parameter of the design, and determines the progression of the amplification factor of the kinematic mechanism 28.

The reduction system which connects the actuator 14 to the activating element 13 can be schematised as in figure 3. A relative simplification for symmetry is illustrated in figures 4A and 4B, together with the directions of the displacement of the end of the motor (X), of the displacement transmitted to the structure (Y) and the initial angle $\alpha_0$. R and F respectively represent the resistance to displacement (taken as the resultant of the aerodynamic forces in the point of contact between the reduction system and the variation mechanism 10) and the force F exerted by the actuator 14. By applying the energetic balance to the simplified schemes illustrated in figures 4A and 4B, the following relation is obtained:

$$F \cdot x - \frac{R}{2} \cdot y = \frac{1}{2} \cdot \left( \frac{K}{2} \right) \cdot y^2$$

con

$$x = L \cdot \left[ \sin\left( \alpha_0 \right) - \sin\left( \alpha_0 - \Delta\alpha \right) \right]$$

e

$$y = 2L \cdot [\cos(\alpha_0 - \Delta\alpha) - \cos(\alpha_0)]$$

The transmission ratio r, i.e. the relation between the force F exerted by the actuator 14 and the resistance R offered by the structure subjected to aerodynamic load, can be expressed as:

$$r = \frac{F}{R} = \frac{1}{2} \cdot \left(\frac{y}{x}\right) + \frac{1}{2} \cdot \left(\frac{K}{2R}\right)\left(\frac{y^2}{x}\right)$$

Note that in the hypothesis of a nil rigidity (K=0 where K represents the equivalent rigidity of the structure that in practice opposes the deformation transmitted by the system) and constant resistance (R=const), for high values of the initial angle, the ratio r of the forces at the start of the displacement is high. By reducing the initial values by $\alpha_0$, low transmission ratios r are obtained, which are advantageous to the force level required of the actuator 14 in order to move the kinematic mechanism.

In the figure reported below the progression of the ratio r is graphically schematised on varying the relation of the excursion with respect to the length of the arm provided by the three-hinged arch (for the sake of simplification R= constant and nil rigidity are assumed).

According to the displacement required of the actuator it is possible to select the most advantageous curve of the graph and consequently the design angle $\alpha_0$.

The force exerted by the actuator 14 with and without aerodynamic load, has been diagrammed according to the relation between the total displacement of the actuator and the length of the arm of the arch.

Note how in both cases the reduction of the transmission ratio with the displacement performs a beneficent role, as it leads to a reduction of the force necessary on increase of the aerodynamic load.

**EP 2 727 825 B1**

The structure of the device for varying the wing profile enables, in fact, a reduction of the force required also on increase of the aerodynamic load.

The actuator force values illustrated above depend on the degree of opening of the kinematic mechanism 28; the effect in terms of force requested of the presence of aerodynamic load with respect to an unloaded configuration can be deduced from the graph.

**Claims**

1. A device (1) for varying a geometry of a wing profile, in particular for a leading edge of wings (2) for aircraft (100), the device (1) comprising:

   ➢ a wing (2) comprising at least a fixed wing body (2a) extending along a main development direction (A) transversal with respect to a longitudinal axis (B) of the aircraft (100) and a reinforcing frame (2b), the wing body (2a) being configured to define at least an upper surface (3) and at least a lower surface (4), and a wing profile (9) of the wing (2);
   ➢ at least an exposed surface (8) longitudinally extending substantially parallel to the development direction (A) of the body (2a) for at least a portion of the overall development of the body (2a), the exposed surface (8) exhibiting at least a first and at least a second engaging portion (6, 7) constrained to the wing body (2a) respectively at the upper surface and the lower surface (3, 4) of the body, the exposed surface (8) defining, in cooperation with the upper surface (3) and the lower surface (4) of the body (2a), at least a front and/or rear portion of the wing (2) internally delimiting a housing compartment (9a), the exposed surface (8) comprising at least a deformable portion (5) interposed between the first and the second engaging portion (6, 7) and mobile relatively to the wing body (2a) such as to determine variations of geometry of the wing profile (9) of the wing (2); in section, according to a perpendicular plane to the development direction (A) of the body, the exposed surface (8) exhibiting a continuous profile, with no break in continuity, between the first and the second engaging portions (6, 7), said deformable portion (5) extending longitudinally along all the longitudinal development of the exposed surface (8) and transversally between the first and the second engaging portion (6, 7) of the exposed surface (8);
   ➢ at least two mechanisms (10) for varying the wing profile, located respectively at a first and at a second longitudinal end (5a, 5b) of the deforming portion (5), each mechanism (10) being arranged internally of the housing compartment (9a) and exhibiting a first engaging portion (11) constrained to the frame (2b) of the wing (2) and at least a second engaging portion (12) active on the deformable portion (5) of the exposed surface (8), the mechanisms (10) being configured to move relatively to the wing body (2a) in a transversal plane to the main development direction (A) of the body (2a) to define a variation in geometry of the deformable portion (5) of the exposed surface (8), the variation in geometry of the deformable portion (5) determining the variation in shape of the wing profile (9) of the wing (2), each mechanism (10) for varying the wing profile comprising a plurality of pusher elements (17) able to rotate about a rotation axis, each of the pusher elements (17) engaging the deformable portion (5) in a respective different pushing point (18) such as to guide the variation of geometry of the deforming portion (5);

11

➢ at least an activating element (13) configured to move the mechanisms (10) for varying the wing profile along the transversal plane, the activating element (13) comprising at least an actuator (14) configured to generate a push (S) and a kinematic mechanism (28) receiving the push (S) generated by the actuator (14) and configured to move the mechanisms (10), the actuator (14) being positioned and configured such as to generate a push (S) in a transversal direction to the movement plane of the mechanisms (10), the kinematic mechanism (28) receiving the push (S) generated by the actuator (14) and generating a corresponding action on the mechanisms (10) to move the mechanisms (10) in the movement plane transversal to the main development direction (A); said device (1) comprising at least a second mechanism (19) at each longitudinal end of the deformable portion (5) for varying the wing profile arranged internally of the housing compartment (9a) and in cooperation with at least one of the mechanisms (10), the second mechanism (19) exhibiting a first engaging portion (20) constrained to the frame (2b) and at least a second engaging portion (21) active on the deformable portion (5) of the exposed surface (8), the second mechanism (19) being configured such as to rotate relatively to the frame (2b) about a transversal axis (M) along at least a plane coinciding with or parallel to the movement plane of the mechanisms (10) for varying the wing profile such as to further guide the deforming of the deformable portion (5) of the exposed surface (8), the first engaging portion (20) of the second mechanism (19) being distanced at least from the first engaging portion (11) of the mechanisms (10) for varying the wing profile, **characterised in that** the second mechanism (19) comprises a plurality of pusher elements (23) able to rotate about the transversal axis (M) each of which is active on the deformable portion (5) in different pushing points (24) such as to guide the variation in geometry of the deformable portion (5).

2. The device of the preceding claim, wherein each of the mechanisms (10) for varying the wing profile comprises at least a lever system (L) provided with a first and at least a second constraining portion (10a, 10b) spaced from one another, the first constraining portion (10a) being engaged to the frame (2b) such as to define a constraint of a hinge type between the mechanism (10) and the frame, the lever system (L) being mobile in rotation about an axis (J) that is substantially perpendicular to the movement plane of the mechanism (10).

3. The device of any one of the preceding claims, wherein the kinematic mechanism (28) comprises a first fixed hinge and constrained stably to the frame (2b), a second mobile hinge constrained to one of the mechanisms (10) and a pusher hinge interposed between the first fixed hinge and the second mobile hinge, the actuator (14) being configured such as to exert the push (S) on the kinematic mechanism (28), in particular on the pusher hinge, and such as to enable movement of the second mobile hinge with respect to the first fixed hinge with a consequent movement of the mechanism (10) along the transversal movement plane.

4. The device of claim 1 or 2 or 3, wherein the kinematic mechanism (28) comprises at least a first arm (15) exhibiting at least a first and a second engaging portion (15a, 15b) located respectively at a first and a second end of the first arm (15), the first engaging portion (15a) being hinged to the frame (2b), in particular at a point that is distanced from the first constraining portion (10a) of the mechanisms (10), the activating element (13) exhibiting a second arm (16) having at least a first and a second engaging portion (16a, 16b) located respectively at a first and a second end of the second arm (16), the first engaging portion of the second arm (16a) being hinged to one of the mechanisms (10), and in particular to the second constraining portion (10b) of the mechanism (10), the second engaging portion (16b) of the second arm being hinged to the second engaging portion (15b) of the first arm (15), the first and second arm (15, 16) being configured at least such as to rotate about the first engaging portion (15a) of the first arm (15), the engaging of the second constraining portion (10b) of the mechanism (10) and the first engaging portion (16a) of the second arm (16), constraining the kinematic mechanism (28) with the mechanism (10) in motion, in particular in rotation.

5. The device of the preceding claim, wherein the second engaging portions (15b, 16b), respectively of the first and second arm (15, 16), are constrained in motion and configured such as to move from a retracted position, distanced from the movement plane of the mechanism (10), to an advanced position, situated nearingly with respect to the movement plane of the mechanism (10) and vice versa, the second engaging portions (15b, 16b) respectively of the first and second arms (15, 16), following the movement from the retracted position to the advanced position and vice versa, setting the first and the second arms (15, 16) in rotation about the first engaging portion (15a) of the first arm (15) and consequently causing the rotation of the mechanism (10) about the axis (J).

6. The device of claim 5, wherein the actuator (14) is engaged with at least one, in particular both, of the second engaging portions (15b, 16b) of the first and second arms (15,16), the actuator (14) being configured such as to apply the push (S) on at least one of the second engaging portions (15b, 16b) in order to move the mechanism (10) between the retracted position and the advanced position and vice versa, the rotation axis (J) of the mechanism (10) being in particular substantially parallel to the action direction of the push (S).

7. The device of the claim 1, wherein the activating element (13) is interposed between the two mechanisms (10) arranged respectively at the first and second longitudinal end (5a, 5b) of the deforming portion (5), the activating element (13) being engaged with each of the mechanisms (10) for moving the mechanisms along respective transversal movement planes, in particular by means of generating a same push (S).

8. The device of any one of claims from 4 to 7, wherein the first engaging portion (15a) of the first arm (15), the first engaging portion (16a) of the second arm (16) and the second engaging portions (15b, 16b) respectively of the first and second arm (15, 16) define substantially a three-hinged arch, the first engaging portion (15a) of the first arm (15) defining a first hinge engaged stably to the frame (2b), the first engaging portion (16a) of the second arm (16) defining a hinge engaged in movement to the mechanism (10), the second engaging portions (15b, 16b) respectively of the first and second arm (15, 16) defining a mobile hinge able to receive the first and second arm (15, 16).

9. The device of any one of the preceding claims, comprising a predetermined number of stiffening elements (22), a stiffening element (22) of the predetermined number being constrained at least to the second engaging portion (12) of one of the mechanisms (10) for varying the wing profile and extending along all the longitudinal development of the deformable portion (5) substantially parallel to the longitudinal extension direction of the exposed surface (8), the stiffening element (22) contacting at least a longitudinal strip of the deformable portion (5) and being configured such as to define on the strip a reinforcement of the deformable portion (5), in particular the stiffening element (22) comprising at least a bar (22a) connected at an end to the second engaging portion (12) of the mechanism (10) for varying the wing profile, and, at the other end, being in contact with the deformable portion (5), the bar (22a) defining the longitudinal contact strip.

10. The device of the preceding claim, wherein a stiffening element (22) is engaged to the second engaging portion (20) of the second mechanism (19) for varying the wing profile, in particular in which the stiffening element (22) is engaged with each of the pusher elements (23) of the second mechanism (19) for varying the wing profile.

**Patentansprüche**

1. Vorrichtung (1) zum Variieren einer Tragflächenprofilgeometrie, insbesondere für eine Profilvorderkante von Tragflächen (2) für Flugzeuge (100), die Vorrichtung (1) umfassend:

eine Tragfläche (2) umfassend mindestens einen feststehenden Tragflächenkörper (2a), der sich entlang einer Hauptentwicklungsrichtung (A) transversal zu einer Längsachse (B) des Flugzeugs (100) erstreckt und einen Verstärkungsrahmen (2b),
wobei der Tragflächenkörper (2a) konfiguriert ist, mindestens eine obere Oberfläche (3) und mindestens eine untere Oberfläche (4), und ein Tragflächenprofil (9) der Tragfläche (2) zu definieren;
mindestens eine exponierte Oberfläche (8), die sich längs im Wesentlichen parallel zur Entwicklungsrichtung (A) des Köpers (2a) für zumindest einen Teil der Gesamtentwicklung des Körpers (2a) erstreckt, wobei die exponierte Oberfläche (8) mindestens einen ersten und mindestens einen zweiten Eingriffsteil (6, 7) aufweist, die am Tragflächenkörper (2a) jeweils an der oberen Oberfläche und an der unteren Oberfläche (3, 4) belegt sind, wobei die exponierte Oberfläche (8) in Kooperation mit der oberen Oberfläche (3) und der unteren Oberfläche (4) des Körpers (2a) mindestens einen vorderen und/oder hinteren Teil der Tragfläche (2) definiert, im Inneren ein Gehäuseabteil (9a) abgrenzend, wobei die exponierte Oberfläche (8) mindestens einen verformbaren Teil (5) umfasst, der zwischen dem ersten und
zweiten Eingriffsteil (6, 7) angeordnet und relativ zum Tragflächenkörper (2a) beweglich ist, um Variationen der Tragflächenprofilgeometrie (9) der Tragfläche (2) zu bestimmen; wobei, im Querschnitt gemäß einer zur Entwicklungsrichtung (A) des Körpers senkrechten Ebene, die exponierte Oberfläche (8) ein kontinuierliches Profil, ohne Unterbrechung der Kontinuität, zwischen den ersten und zweiten Eingriffsteilen (6, 7) aufweist, wobei sich der verformbare Teil (5) längs entlang der ganzen Längsentwicklung der exponierten Oberfläche (8) und transversal zwischen der ersten und zweiten Eingriffsteil (6, 7) der exponierten Oberfläche erstreckt;
mindestens zwei Mechanismen (10) zum Variieren des Tragflächenprofils, die sich jeweils an einem ersten und an einem zweiten Längsende (5a, 5b) des verformbaren Teils (5) befinden, wobei jeder Mechanismus (10) im Inneren des Gehäuseabteils (9a) angeordnet ist und einen ersten Eingriffsteil (11), der an dem Rahmen (2b) der Tragfläche (2) belegt ist, und einen zweiten Eingriffsteil (12), der auf den verformbaren Teil (5) der exponierten Oberfläche (8) wirkt, aufweist, wobei die Mechanismen (10) konfiguriert sind, sich relativ zum Tragflächenkörper (2a) in einer Transversalebene zur Hauptentwicklungsrichtung (A) des Körpers (2a) zu bewegen, um eine Variation der Geometrie des verformbaren Teils (5) der exponierten Oberfläche (8) zu definieren, wobei die Variation der Geometrie des verformbaren Teils (5) die Variation der Form des Tragflächenprofils (9) der Tragfläche (2) bestimmt, wobei jeder Mechanismus (10) zum Variieren des Tragflächenprofils eine Mehrzahl von Schubelementen (17) umfasst, die um eine Rotationsachse rotieren können, wobei jedes der Schubelemente (17) in den verformbaren Teil (5) an einem jeweiligen Schubpunkt (18) eingreift, um die Variation der Geometrie des verformbaren Teils (5) zu führen;

mindestens ein aktivierendes Element (13), konfiguriert, um die Mechanismen (10) zum Variieren des Tragflächenprofils entlang der Transversalebene, wobei das aktivierende Element (13) mindestens einen Aktuator (14), konfiguriert, um einen Schub (S) zu erzeugen, und einen kinematischen Mechanismus (28), der den vom Aktuator (14) erzeugten Schub (S) aufnimmt und konfiguriert ist, die Mechanismen (10) zu bewegen, umfasst, wobei der Aktuator (14) positioniert und konfiguriert ist, um den Schub (S) in einer Transversalrichtung zur Bewegungsebene der Mechanismen (10) zu erzeugen, wobei der kinematische Mechanismus (28) den vom Aktuator (14) erzeugten Schub (S) aufnimmt und eine entsprechende Wirkung auf die Mechanismen (10) erzeugt, um die Mechanismen (10) in der Bewegungsebene transversal zur Hauptentwicklungsrichtung (A) zu bewegen;

wobei die Vorrichtung (1) an jedem Längsende des verformbaren Teils (5) mindestens einen zweiten Mechanismus (19) zum Variieren des Tragflächenprofils umfasst, angeordnet im Innern des Gehäuseabteils (9a) und in Kooperation mit mindestens einem der Mechanismen (10), wobei der zweite Mechanismus (19) einen ersten Eingriffsteil (20), am Rahmen (2b) belegt, und mindestens einen zweiten Eingriffsteil (21), auf den verformbaren Teil (5) der exponierten Oberfläche (8) wirkend, aufweist, wobei der zweite Mechanismus (19) konfiguriert ist, um relativ zum Rahmen (2b) um eine Transversalachse (M) entlang mindestens eine Ebene, die mit der Bewegungsebene der Mechanismen (10) zusammenfällt oder parallel dazu ist, zu rotieren, um das Tragflächenprofil zu Variieren, um die Verformung des verformbaren Teils (5) der exponierten Oberfläche (8) weiter zu führen, wobei der erste Eingriffsteil (20) des zweiten Mechanismus (19) mindestens vom ersten Eingriffsteil (11) der Mechanismen (10) zum Variieren des Tragflächenprofils beabstandet ist, **dadurch gekennzeichnet, dass** der zweite Mechanismus (19) eine Mehrzahl von Schubelementen (23) umfasst, die um die Transversalachse (M) rotieren können, wobei jede von diesen auf den verformbaren Teil (5) an unterschiedlichen Schubpunkten (24) wirkt, um die Variation der Geometrie des verformbaren Teils (5) zu führen.

2. Vorrichtung nach der vorhergehenden Anspruch, wobei jeder der Mechanismen (10) zum Variieren des Tragflächenprofils mindestens ein Hebelsystem (L) umfasst, das mit einem ersten und mindestens einem zweiten Belegungsteil (10a, 10b), voneinander beabstandet, versehen ist, wobei der erste Belegungsteil (10a) in den Rahmen (2b) eingreift, um eine Belegung eines Gelenktyps zwischen dem Mechanismus (10) und dem Rahmen zu definieren, wobei das Hebelsystem (L) in Rotation um eine Achse (J) beweglich ist, die im Wesentlichen senkrecht zur Bewegungsebene des Mechanismus (10) ist.

3. Vorrichtung nach einem der vorhergehenden Ansprüche, wobei der kinematische Mechanismus (28) ein erstes feststehendes Gelenk, stabil am Rahmen (2b) belegt, ein zweites bewegliches Gelenk, belegt an einem der Mechanismen (10), und ein Schubgelenk, angeordnet zwischen dem ersten feststehenden Gelenk und dem zweiten beweglichen Gelenk, umfasst, wobei der Aktuator (14) konfiguriert ist, um den Schub (S) auf den kinematischen Mechanismus (28) auszuüben, insbesondere auf das Schubgelenk, und um eine Bewegung des zweiten beweglichen Gelenks in Bezug auf das erste feststehende Gelenk mit einer folgenden Bewegung des Mechanismus (10) entlang der transversalen Bewegungsebene zu ermöglichen.

4. Vorrichtung nach Anspruch 1 oder 2 oder 3, wobei der kinematische Mechanismus (28) mindestens einen ersten Arm (15) umfasst, der mindestens einen ersten und einen zweiten Eingriffsteil (15a, 15b) aufweist, die sich jeweils an einem ersten und an einem zweiten Ende des ersten Arms befinden, wobei der erste Eingriffsteil (15a) am Rahmen (2b) eingehängt ist, insbesondere an einem Punkt, der vom ersten Belegungsteil (10a) der Mechanismen (10) beabstandet ist, wobei die aktivierende Element (13) einen zweiten Arm (16) aufweist, der mindestens einen ersten und einen zweiten Eingriffsteil (16a, 16b) hat, die sich jeweils an einem ersten und an einem zweiten Ende des zweiten Arms (16) befinden, wobei der erste Eingriffsteil des zweiten Arms (16a) an einen der Mechanismen (10) eingehängt ist, und insbesondere an den zweiten Belegungsteil (10b) des Mechanismus (10), wobei der zweite Eingriffsteil (16b) des zweiten Arms am zweiten Eingriffsteil (15b) des ersten Arms (15) eingehängt ist, wobei der erste und zweite Arm (15, 16) mindestens konfiguriert sind, um um den ersten Eingriffsteil (15a) des ersten Arms (15) zu rotieren, wobei das Eingreifen des zweiten Belegungsteils (10b) des Mechanismus (10) und des ersten Eingriffsteils (16a) des zweiten Arms (16) den kinematischen Mechanismus (28) mit dem Mechanismus (10) in Bewegung belegen, insbesondere in Rotation.

**5.** Vorrichtung nach dem vorhergehenden Anspruch, wobei die zweiten Eingriffsteile (15b, 16b) des jeweils ersten und zweiten Arms (15, 16) in Bewegung belegt und konfiguriert sind, um sich von einer zurückgezogenen Position, entfernt von der Bewegungsebene des Mechanismus (10), zu einer vorgerückten Position, angenähert in Bezug auf die Bewegungsebene des Mechanismus (10), und umgekehrt, liegend, zu bewegen, wobei die zweiten Eingriffsteile (15b, 16b) der jeweils ersten und zweiten Arme (15, 16) der Bewegung von der zurückgezogenen Position zur vorgerückten Position und umgekehrt folgen, die ersten und zweiten Arme (15, 16) in Rotation um den ersten Eingriffsteil (15a) des ersten Arms (15) versetzend und folglich die Rotation des Mechanismus (10) um die Achse (J) bewirkend.

**6.** Vorrichtung nach Anspruch 5, wobei der Aktuator (14) sich im Eingriff mit mindestens einem, insbesondere beiden, der zweiten Eingriffsteile (15b, 16b) des ersten und zweiten Arms (15, 16) befindet, wobei der Aktuator (14) konfiguriert ist, um den Schub (S) auf mindestens einen der zweiten Eingriffsteile (15b, 16b) anzuwenden, um den Mechanismus (10) zwischen der zurückgezogenen Position und der vorgerückten Position und umgekehrt zu bewegen, wobei die Rotationsachse (J) des Mechanismus (10) insbesondere im Wesentlichen parallel zur Wirkrichtung des Schubs (S) ist.

**7.** Vorrichtung nach Anspruch 1, wobei das aktivierende Element (13) zwischen den zwei Mechanismen (10) jeweils am ersten und zweiten Längsende (5a, 5b) des verformbaren Teils (5) angeordnet ist, wobei das aktivierende Element (13) mit jedem der Mechanismen (10) zur Bewegung der Mechanismen entlang jeweiliger transversaler Bewegungsebenen, insbesondere durch Erzeugen eines gleichen Schubs (S), im Eingriff ist.

**8.** Vorrichtung nach einem der Ansprüche von 4 bis 7, wobei der erste Eingriffsteil (15a) des ersten Arms (15), der erste Eingriffsteil (16a) des zweiten Arms und die zweiten Eingriffsteile (15b, 16b) des jeweils ersten und zweiten Arms (15, 16) im Wesentlichen einen dreigelenkigen Bogen definieren, wobei der erste Eingriffsteil (15a) des ersten Arms (15) ein erstes Gelenk definiert, das stabil in Eingriff mit dem Rahmen (2b) ist, der erste Eingriffsteil (16a) des zweiten Arms (16) ein Gelenk definiert, das beweglich im Eingriff mit dem Mechanismus (10) ist, und die zweiten Eingriffsteile (15b, 16b) des jeweils ersten und zweiten Arms (15, 16) ein bewegliches Gelenk definieren, das den ersten und zweiten Arm (15, 16) aufnehmen kann.

**9.** Vorrichtung nach einem der vorhergehenden Ansprüche, umfassend eine vorbestimmte Anzahl an Versteifungselementen (22), wobei ein Versteifungselement (22) der vorbestimmten Anzahl mindestens am zweiten Eingriffsteil (12) von einem der Mechanismen (10) zum Variieren des Tragflächenprofils belegt ist und sich entlang der ganzen Längsentwicklung des verformbaren Teils (5) im Wesentlichen parallel zur Längsausdehnungsrichtung der exponierten Oberfläche (8) erstreckt, wobei das Versteifungselement (22) mindestens einen Längsstreifen des verformbaren Teils (5) kontaktiert und konfiguriert ist, um auf dem Streifen eine Verstärkung des verformbaren Teils (5) zu definieren, insbesondere wobei das Versteifungselement (22) mindestens eine Stange (22a) umfasst, die an einem Ende mit dem zweiten Eingriffsteil (12) des Mechanismus (10) zum Variieren des Tragflächenprofils verbunden ist, und, an dem anderen Ende, in Kontakt mit dem verformbaren Teil (5), wobei die Stange (5a) einen länglichen Kontaktstreifen definiert.

**10.** Vorrichtung nach dem vorhergehenden Anspruch, wobei ein Versteifungselement (22) mit dem zweiten Eingriffsteil (20) des zweiten Mechanismus (19) zum Variieren des Tragflächenprofils im Eingriff ist, insbesondere in dem das Versteifungselement (22) mit jedem der Schubelemente (23) des zweiten Mechanismus (19) zum Variieren des Tragflächenprofils im Eingriff ist.

**Revendications**

**1.** Dispositif (1) pour varier une géométrie d'un profil alaire, en particulier pour un bord d'attaque des ailes (2) d'un avion (100), le dispositif (1) comprenant:

> une aile (2) comprenant au moins un corps alaire fixe (2a) s'étendant le long d'une direction de développement principale (A) transversale par rapport à un axe longitudinal (B) de l'avion (100), et un châssis de renforcement (2b), le corps alaire (2a) étant configuré pour définir au moins une surface supérieure (3) et au moins une surface inférieure (4), et un profil alaire (9) de l'aile (2);
> au moins une surface exposée (8) s'étendant longitudinalement substantiellement parallèle à la direction de développement (A) du corps (2a), la surface exposée (8) présentant au moins une première et au moins une deuxième portion d'engagement (6, 7) reliées au corps alaire (2a) respectivement sur la surface supérieure et sur la surface inférieure (3, 4) du corps, la surface exposée (8) définissant en coopération avec la surface supérieure (3) et avec la surface inférieure (4) du corps (2a) au moins une portion antérieure et/ou postérieure de l'aile (2) délimitant à l'intérieur un compartiment de logement (9a), la surface exposée (8) comprenant au moins une portion déformable (5) placée ente la première et la deuxième portion d'engagement (6, 7) et mobile par rapport au corps alaire (2a) de sorte à déterminer des variations de géométrie du profil alaire (9) de l'aile (2); en section selon un plan perpendiculaire à la direction de développement (A) du corps, la surface exposée (8) présentant un profil continu, sans interruption de continuité, entre la première et la deuxième portion d'engagement (6, 7), ladite portion déformable (5) s'étendant longitudinalement le long de l'entier développement longitudinal de la surface exposée (8) et transversalement entre la première et la deuxième portion d'engagement (6, 7) de la surface exposée (8);

➢ au moins deux mécanismes (10) aptes à varier le profil alaire, placés respectivement à une première et à une deuxième extrémité longitudinale (5a, 5b) de la portion déformable (5), chaque mécanisme (10) étant logé à l'intérieur du compartiment de logement (9a) et présentant une première portion d'engagement (11) reliée au châssis (2b) de l'aile (2) et au moins une deuxième portion d'engagement (12) agissant sur la portion déformable (5) de la surface exposée (8), les mécanismes (10) étant configurés pour se déplacer par rapport au corps alaire (2a) dans un plan transversal à la direction de développement principale (A) du corps (2a) pour définir une variation de géométrie de la portion déformable (5) de la surface exposée (8), la variation de géométrie de la portion déformable (5) déterminant la variation de forme du profil alaire (9) de l'aile (2), chaque mécanisme (10) pour varier le profil alaire comprenant une pluralité d'éléments de poussée (17) aptes à tourner autour d'un axe de rotation, chacun des éléments de poussée (17) engageant la portion déformable (5) dans un point de poussée différent respectif (18) de sorte à guider la variation de géométrie de la portion déformable (5);

➢ au moins un élément d'activation (13) configuré pour déplacer les mécanismes (10) aptes à varier le profil alaire le long du plan transversal, l'élément d'activation (13) comprenant au moins un actionneur (14) configuré pour produire une poussée (S) et un mécanisme cinématique (28) recevant la poussée (S) produite par l'actionneur (14) et configuré pour déplacer les mécanismes (10), l'actionneur (14) étant positionné et configuré de sorte à produire une poussée (S) dans une direction transversale au plan de mouvement des mécanismes (10), le mécanisme cinématique (28) recevant la poussée (S) produite par l'actionneur (14) et produisant une action correspondante sur les mécanismes (10) pour déplacer les mécanismes (10) dans le plan de mouvement transversal à la direction de développement principale (A);

ledit dispositif (1) comprenant au moins un deuxième mécanisme (19) à chaque extrémité longitudinale de la portion déformable (5) pour varier le profil alaire placé à l'intérieur du compartiment de logement (9a) et en coopération avec au moins l'un des mécanismes (10), le deuxième mécanisme (19) présentant une première portion d'engagement (20) reliée au châssis (2b) et au moins une deuxième portion d'engagement (21) agissant sur la portion déformable (5) de la surface exposée (8), le deuxième mécanisme (19) étant configuré de sorte à tourner par rapport au châssis (2b) autour d'un axe transversal (M) le long d'au moins un plan coïncidant avec ou parallèle au plan de mouvement des mécanismes (10) aptes à varier le profil alaire de sorte à guider en outre la déformation de la portion déformable (5) de la surface exposée (8), la première portion d'engagement (20) du deuxième mécanisme (19) étant placée à une certaine distance au moins de la première portion d'engagement (11) des mécanismes (10) aptes à varier le profil alaire, **caractérisé en ce que** le deuxième mécanisme (19) comprend une pluralité d'éléments de poussée (23) aptes à tourner autour de l'axe transversal (M), chacun d'eux agissant sur la portion déformable (5) dans des points de poussée différents (24) de sorte à guider la variation de géométrie de la portion déformable (5).

2. Dispositif selon la revendication précédente, où chacun des mécanismes (10) aptes à varier le profil alaire comprend au moins un système à levier (L) muni d'une première et d'au moins une deuxième portion de liaison (10a, 10b) à une certaine distance l'une de l'autre, la première portion de liaison (10a) étant engagée au châssis (2b) de sorte à définir une liaison articulée entre le mécanisme (10) et le châssis, le système à levier (L) étant mobile en rotation autour d'un axe (J) substantiellement perpendiculaire au plan de mouvement du mécanisme (10).

3. Dispositif selon l'une quelconque des revendications précédentes, où le mécanisme cinématique (28) comprend une première articulation fixe et reliée de façon stable au châssis (2b), une deuxième articulation mobile reliée à l'un des mécanismes (10), et une articulation de poussée placée entre la première articulation fixe et la deuxième articulation mobile, l'actionneur (14) étant configuré de sorte à exercer la poussée (S) sur le mécanisme cinématique (28), en particulier sur l'articulation de poussée, et de sorte à permettre le mouvement de la deuxième articulation mobile par rapport à la première articulation fixe avec un mouvement conséquent du mécanisme (10) le long du plan de mouvement transversal.

4. Dispositif selon la revendication 1 ou 2 ou 3, où le mécanisme cinématique (28) comprend au moins un premier bras (15) présentant au moins une première et une deuxième portion d'engagement (15a, 15b) placées respectivement à une première et à une deuxième extrémité du premier bras (15), la première portion d'engagement (15a) étant articulée au châssis (2b), en particulier dans un point à une certaine distance de la première portion de liaison (10a) des mécanismes (10), l'élément d'activation (13) présentant un deuxième bras (16) ayant au moins une première et une deuxième portion d'engagement (16a, 16b) placées respectivement à une première et à une deuxième extrémité du deuxième bras (16), la première portion d'engagement du deuxième bras (16a) étant articulée à l'un des mécanismes (10), et en particulier à la deuxième portion de liaison (10b) du mécanisme (10), la deuxième portion d'engagement (16b) du deuxième bras étant articulée à la deuxième portion d'engagement (15b) du premier bras (15), le premier et le deuxième bras (15, 16) étant configurés au moins de sorte à tourner autour de la première portion d'engagement (15a) du premier bras (15), l'engagement de la deuxième portion de liaison (10b) du mécanisme (10) et de la première portion d'engagement (16a) du deuxième bras (16) reliant le mécanisme cinématique (28) au mécanisme (10) en mouvement, en particulier en rotation.

5. Dispositif selon la revendication précédente, où les deuxièmes portions d'engagement (15b, 16b), respectivement du premier et du deuxième bras (15, 16), sont reliées en mouvement et configurées de sorte à se déplacer d'une position rétractée, à une certaine distance du plan de mouvement du mécanisme (10), à une position avancée, placée proche du plan de mouvement du mécanisme (10), et vice-versa, les deuxièmes portions d'engagement (15b, 16b) respectivement du premier et du deuxième bras (15, 16) suivant le mouvement de la position rétractée à la position avancée et vice-versa, mettant le premier et le deuxième bras (15, 16) en rotation autour de la première portion d'engagement (15a) du premier bras (15) et provoquant par conséquent la rotation du mécanisme (10) autour de l'axe (J).

6. Dispositif selon la revendication 5, où l'actionneur (14) est engagé avec au moins l'une, en particulier avec les deux deuxièmes portions d'engagement (15b, 16b) du premier et du deuxième bras (15, 16), l'actionneur (14) étant configuré de sorte à appliquer la poussée (S) sur au moins l'une des deuxièmes portions d'engagement (15b, 16b) afin de déplacer le mécanisme (10) entre la position rétractée et la position avancée et vice-versa, l'axe de rotation (J) du mécanisme (10) étant en particulier substantiellement parallèle à la direction d'action de la poussée (S).

7. Dispositif selon la revendication 1, où l'élément d'activation (13) est placé entre les deux mécanismes (10) positionnés respectivement à la première et à la deuxième extrémité longitudinale (5a, 5b) de la portion déformable (5), l'élément d'activation (13) étant engagé avec chacun des mécanismes (10) pour déplacer les mécanismes le long de plans de mouvement transversal respectifs, en particulier en produisant la même poussée (S).

8. Dispositif selon l'une quelconque des revendications 4 à 7, où la première portion d'engagement (15a) du premier bras (15), la première portion d'engagement (16a) du deuxième bras (16) et les deuxièmes portions d'engagement (15b, 16b) respectivement du premier et du deuxième bras (15, 16) définissent substantiellement un arc à trois articulations, la première portion d'engagement (15a) du premier bras (15) définissant une première articulation engagée de façon stable au châssis (2b), la première portion d'engagement (16a) du deuxième bras (16) définissant une articulation engagée en mouvement au mécanisme (10), les deuxièmes portions d'engagement (15b, 16b) respectivement du premier et du deuxième bras (15, 16) définissant une articulation mobile apte à recevoir le premier et le deuxième bras (15, 16).

9. Dispositif selon l'une quelconque des revendications précédentes, comprenant un nombre préétabli d'éléments de raidissement (22), un élément de raidissement (22) du nombre préétabli étant relié au moins à la deuxième portion d'engagement (12) de l'un des mécanismes (10) aptes à varier le profil alaire et s'étendant le long de l'entier développement longitudinal de la portion déformable (5) substantiellement parallèle à la direction d'extension longitudinale de la surface exposée (8), l'élément de raidissement (22) étant en contact avec au moins une bande longitudinale de la portion déformable (5) et étant configuré de sorte à définir sur la bande un renforcement de la portion déformable (5), en particulier l'élément de raidissement (22) comprenant au moins une barre (22a) reliée à une extrémité à la deuxième portion d'engagement (12) du mécanisme (10) pour varier le profil alaire, et à l'autre extrémité étant en contact avec la portion déformable (5), la barre (22a) définissant la bande de contact longitudinale.

10. Dispositif selon la revendication précédente, où un élément de raidissement (22) est engagé à la deuxième portion d'engagement (20) du deuxième mécanisme (19) pour varier le profil alaire, en particulier où l'élément de raidissement (22) est engagé avec chacun des éléments de poussée (23) du deuxième mécanisme (19) pour varier le profil alaire.

Fig. 1

Fig. 2

Fig. 3

Fig. 4A

Fig. 4B

Fig. 5

EP 2 727 825 B1

Fig. 6A

Fig. 6B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3716209 A
- WO 2004108525 A1
- GB 1580974 A
- US 3698668 A
- US 2010224734 A1